Europäisches Patentamt

(19) European Patent Office

Office européen des brevets

(11) Publication number : **0 331 474 B1**

# EUROPEAN PATENT SPECIFICATION

(12)

(45) Date of publication of patent specification :
29.01.92 Bulletin 92/05

(51) Int. Cl.⁵ : **A01N 25/02,** A01N 25/04,
A01N 25/06, A01N 25/14

(21) Application number : **89302055.2**

(22) Date of filing : **01.03.89**

(54) **Spray formulations.**

(30) Priority : **02.03.88 GB 8804988**

(43) Date of publication of application :
**06.09.89 Bulletin 89/36**

(45) Publication of the grant of the patent :
**29.01.92 Bulletin 92/05**

(84) Designated Contracting States :
**AT BE CH DE ES FR GB GR IT LI LU NL SE**

(56) References cited :
**EP-A- 0 093 105
DE-A- 2 556 656
GB-A- 2 095 109
GB-A- 2 166 974
US-A- 3 133 809
CENTRAL PATENTS INDEX, BASIC AB-
STRACTS JOURNAL, week T49, 1972, abstract
no. 77906T, Derwent Publications Ltd, London,
GB; & SU-A-333 913 (V.P. TROPIN et al.) 06-
05-1972**

(73) Proprietor : **THE WELLCOME FOUNDATION
LIMITED
Unicorn House 160 Euston Road
London NW1 2BP (GB)**

(72) Inventor : **Martin, Robert
The Wellcome Research Laboratories
Berkhamsted
Hertfordshire (GB)**
Inventor : **Jeffries, David Alan
The Wellcome Research Laboratories
Berkhamsted
Hertfordshire (GB)**
Inventor : **North, Denise Kim
The Wellcome Research Laboratories
Berkhamsted
Hertfordshire (GB)**
Inventor : **Groome, John Martin
The Wellcome Research Laboratories
Berkhamsted
Hertfordshire (GB)**

(74) Representative : **Rollins, Anthony John et al
Group Patents & Agreements The Wellcome
Research Laboratories Langley Court
Beckenham Kent BR3 3BS (GB)**

## Description

The present invention relates to spray formulations, especially pesticidal formulations of the sort which may be diluted with water to form a sprayable preparation, for example a pressure pack ("aerosol") preparation or a spray, particularly an ultra low volume (ULV) spray for domestic, horticultural, agricultural, environmental or industrial use.

Water-based sprays are advantageous because they cost less than oil-based sprays and are often less toxic to mammals. However, particularly when the ambient temperature is high, the water in the spray droplets evaporates and the droplets become smaller and drift more readily from the area being sprayed. The size of the droplets is frequently specially chosen to suit the application, for example to maximise droplet adherence to flying insects or adherence to plant foliage, to increase bio-availability, or to control the size of the area being sprayed and the delivery rate per square metre ; such care is pointless if the spray droplets change size, possibly unpredictably, following spraying.

GB-A-2095109 discloses improved water-dilutable formulations comprising a long-chain fatty alkanol which retards the evaporation of the water from the drops of the spray.

We have now found that still better evaporation retardation can be achieved if the formulation satisfies the following Formula :

$$\frac{\text{mass of oil phase}}{\text{mass of retardant}} \leq \frac{M_{oil}}{M_{retardant}} \times Exp\left[\frac{\ln(L/4) + C \ln(AX^B)}{C}\right]$$

where L is less than or equal to 15, A = 700376, B = − 1.51, C = 0.8472
$M_{oil}$ is the weighted average relative molar mass of the oil phase
$M_{retardant}$ is the average molar mass of the retardant, and

$$X = \frac{(M_{oil})^{1.8}}{Y}$$

where Y is the molar solubility ratio of the formulation, defined as the minimum number of moles of oil phase which will dissolve the retardant, divided by the number of moles of retardant, provided that, in the Formula above, any solvent which has no liquid phase at 27°C at atmospheric pressure is excluded.

For the avoidance of doubt, and to clarify any ambiguities which may arise in the printing or copying of this specification, it is to be noted that the relational symbol in the Formula is "less than or equal to", "Exp" means the exponential of what follows in brackets, "ln" means the natural logarithm, i.e. $\log_e$, L is divided by 4, X is raised to the power B, B is a negative value (minus 1.51) and, in the definition of X, $M_{oil}$ is raised to the power 1.8.

The "oil phase" is the liquid non-aqueous phase and will comprise one or more of the active ingredient, the solvent therefor and the emulsifier.

Preferably L, which is related to the evaporation rate from the sprayed droplets, is less than 12, 10, or 8 and is most preferably less than 5. A distilled water spray has an "L" value of about 26, and most conventional diluted formulations have a value of about 22-30. In the formulations of the invention, "L" can be set at a desired value in order to calculate the required ratios of the ingredients. "L" can also be measured for a given formulation by the method described below.

The evaporation retardant is a $C_{16-20}$ alkanol, 1-hexadecylamine, 1-heptadecylamine or 1-octadecylamine. The $C_{16-20}$ alkanol is preferably a saturated alcohol which is preferably saturated at 27°C. It is preferably a primary alcohol : preferably with no more than one or two side substitutions selected from methyl, ethyl, trifluoromethyl and halo (e.g. fluoro or chloro), with such substitutions preferably remote from the alcohol group (preferably at least 7 carbon atoms away from the hydroxyl group), and preferably the alkanol is not substitued at all. Octadecan-1-ol and, particularly, hexadecan-1-ol are preferred. Hexadecan-1-ol (also known as cetyl alchohol) is usually available commercially as a mixture with a minor proportion of octadecan-1-ol (stearyl alcohol) and such "cetostearyl alcohol" is quite satisfactory. Heptadecan-1-ol performs adequately but is much more expensive. Less preferred $C_{16-20}$ alkanols include hexadecan-2-ol, 1,2-hexadecandiol and 1,2-octadecandiol.

The emulsifier may be any suitable compound or mixture of compounds. Cationic emulsifiers can be used, but they tend to irritate the users' eyes. Anionic emulsifiers such as calcium dodecyl benzene sulphate (CDBS) or sodium di-isopropyl naphthalene sulphonate (SDNS) can also be used, but these are not as effective at stabilising the emulsion. Preferably, the emulsifier is a non-ionic compound, or mixture of non-ionic compounds, having an HLB (hydrophilic/lipophilic balance) of 8-18. Suitable compounds include polyoxyethylene stearyl ethers (PSE) polyoxyethylene monolaurates (PEM), polyoxyethylene mono-oleates (PMO), sorbitan mono-oleate (SMO), nonylphenol ethoxylate (NPE), polyethylene glycol (PEG) and blends of oleyl ethoxylate (10 mole) and PEG20 glyceryl oleate (OE/PGO).

These emulsifiers are available as follows :

| Abbrev | Trade name | Supplier |
|---|---|---|
| OE/PGO | Tegoplant EM11 | Th. Goldschmidt Ltd |
| PSE | Brij 72, Brij 76, Brij 78 | ICI Speciality Chemicals |
| PEM | Tween 20 | ICI Speciality Chemicals |
| SMO | Span 80 | ICI Speciality Chemicals |
| PMO | Tween 80 | ICI Speciality Chemicals |
| NPE | Ethylan KEO,55,BV | Lankro Chemicals Limited |
| CDBS | Arylan CA | Lankro Chemicals Limited |
| SDN | Aerosol OS | Cyanamid GB Ltd |

The solvent, at least for an oil-soluble active ingredient, preferably has a low relative molecular mass, namely less than about 200. Suitable compounds include lower alkyl esters, lower ketones, lower alkanols and lower alkanes, the term "lower" meaning $C_{1-10}$, preferably $C_{1-8}$.

Particular solvents include the following, all available from Exxon Chemicals Limited.

"Solvesso 150" — An aromatic hydrocarbon solvent (C9 to C11) with a distillation range 190 to 210°C.

"Solvesso 200" — An aromatic hydrocarbon solvent (C10 to C12) with a distillation range 226 to 290°C.

"Exxate 700" — Heptyl acetate 99% pure, or Odourless kerosene — A mixture of high boiling non-aromatic hydrocarbons consisting of paraffins and naphthenes with a distillation range of 180 to 270°C.

The formulation may comprise more than one active ingredient (optionally with a synergist or potentiator, which is regarded as an active ingredient for the purpose of the Formula above), more than one solvent, more than one emulsifier and/or more than one retardant, together with other ingredients such as perfumes, dyes, anti-foam agents, solids (especially to form wettable powders) and thickeners. Some compounds, such as butane, propane and dichlorodifluoromethane and carbon dioxide are highly volatile and are used as propellants in pressure pack formulations. Although sometimes acting as solvents for particular active ingredient, they almost instantly evaporate from the drops when sprayed and are thus excluded from the calculations in the Formula above. Such solvent/propellants are those which have no liquid phase at 27°C at atmospheric pressure.

$M_{oil}$, the average molecular weight of the oil phase, is the weighted average, i.e. taking into account the relative proportions of the ingredients.

The value "Y", namely the molar solubility ratio of the formulation, may be derived empirically by making up at 40°C a series of mixtures with different ratios of oil phase to alkanol, allowing the mixtures to cool to 27°C, leaving the cool mixtures for at least 48 hours at 27°C, and determining the amount, in moles, of the oil phase which is needed to dissolve completely a given amount of retardant, in moles. The former is then divided by the latter to give Y.

The formulations of the invention may be (i) single phase substantially anhydrous formulations, or (ii) emulsions comprising water. In a formulation of type (ii), some of the active ingredient, solvent or emulsifier components may partition into the aqueous phase, in which case such components are deemed not to be part of the oil phase in the Formula above. Examples of water-miscible solvents include ethanol, propanol, ethylene glycol and propylene glycol. It has been found that partially water-miscible components may be treated as being wholly water-miscible and hence excluded from the oil phase in the calculations.

When the formulation of the invention is diluted to give sprayable preparation, the molar ratio of water to retardant should preferably not exceed about 9000, and preferably not exceed 8000, 7000 or 6000. It is perfectly possible to prepare a more dilute solution, but all that will happen is that the retardant will be unable to form a film over the entire surface of the droplets, and the water will evaporate until there is a sufficient concentration of the retardant to form a complete film which will then retard further evaporation. Thus, the droplet size is less controllable and, in addition, a larger volume of solution must be stored and pumped, which is inefficient.

The active ingredient may be an insecticide, acaricide, herbicide, fungicide, plant growth regulator, insect behaviour modifier, biological control agent (e.g. viruses, bacteria and eggs of parasites), dye, perfume, bactericide, lubricant, medicament, paint, polish, lacquer (including hair lacquer), textile treatment (including sizes), or any other compound to be sprayed in a water-based formulation. Sprays in accordance with the invention are particularly suitable for spraying buildings, residential or commercial areas and insect breeding grounds (such as swamps and other tracts of water) with insecticide and for spraying crops with herbicides, insecticides, fungicides and plant growth regulators.

Suitable pesticides including pyrethroids (such as permethrin, deltamethrin, cypermethrin (including alphamethrin, the allethrins, fenvalerate and cyfluthrin), organophosphates (such as ethion, chlorfenvinphos, chlorpyrifos (methyl) or coumaphos), carbamates, organochlorines (such as DDT, dieldrin, dicofol, chlorpropylate or tetradifon), lipid amides, bicyclooctanes and dithianes. Suitable herbicides include glyphosate. The sprays may be delivered by pumping through a nozzle, especially a sonic nozzle, by pumping over an ultrasonic nebulizer, or via a spinning disc. The droplets may be electro-statically charged, if desired. Ultra low volume ("ULV") sprays (i.e. less than about 5 litres per hectare) or low volume ("LV") sprays (ie about 5-200 litres per hectare) may be used.

As well as the uses discussed above, at least some of the formulations of the invention can be used to form a larvicidal film over a lake.

To determine whether a given formulation satisfies the Formula given above, the following procedure may be adopted. If the formulation is an emulsion, the emulsion should first be "broken" by extraction of the concentrate with a suitable solvent such as ether. The ingredients are then analysed by suitable quantitative and qualitative analytical methods. If not already known, the miscibility of each component with water is tested : if the component is water-miscible in the conditions of the formulation, it is excluded from the calculations. The solubility of the evaporation retardant in the oil phase (excluding water-miscible components) is determined. The parameters are then operated on in the manner defined in the Formula to see whether the (mass of oil phase)/(mass of retardant) ratio is less than or equal to the figure on the right hand side of the Formula. This procedure is explained below with specific reference to the Examples.

Preferred embodiments of the invention will now be described by way of example.

Example 1A

A ULV insecticide formulation is made up as follows:

| | %mass/mass | Rel. molar mass |
|---|---|---|
| Oil phase | | |
| Permethrin | 10.32 | 391 |
| S-Bioallethrin | 1.51 | 302 |
| Piperonyl Butoxide | 11.32 | 338 |
| Odourless kerosene | 9.30 | 170 |
| Hexadecan-1-ol | 3.00 | 242 |
| Emulsifiers | | |
| Tegoplant EM11 | 0.75 | |
| Brij 76 | 0.24 | |
| Tween 20 | 0.01 | |
| Aqueous phase | | |
| Water | 63.45 | 18 |
| Silcolapse 5000 | 0.10 | – |

"Silcolapse" is a Regd. T.M.

The concentrate is diluted 1 + 9 parts with water for application.

Average relative molar mass of oil phase = 271

Molar solubility ratio (moles oil phase/moles alkanol) = 9.4

Model prediction : ratio (mass of oil phase/mass of alkanol) of a formulation within the scope of the invention :

Maximum ratio with an evaporation rate (L) of 15 = 27 with L of 10 = 17 and with L of 5 = 7.

Hence, the invention encompasses all such formulations where the mass ratio for this solvent/pesticide mixture to hexadecan-1-ol is less than or equal to 27.

The above formulation has the ratio (mass of oil phase/mass of alkanol) = 10.8 and the ratio (moles water/moles of alkanol) = 4318 when diluted.

Observed average evaporation rate (L) = 3.8

Example 1B (A ULV insecticide spray)

|  | %mass/mass | Rel.molar mass |
|---|---|---|
| **Oil phase** | | |
| Permethrin | 10.87 | 391 |
| S-Bioallethrin | 0.15 | 302 |
| Piperonyl butoxide | 11.07 | 338 |
| Odourless kerosene | 9.30 | 170 |
| Hexadecan-1-ol | 3.00 | 242 |
| **Emulsifiers** | | |
| Tegoplant EM11 | 0.75 | |
| Brij 76 | 0.24 | |
| Tween 20 | 0.01 | |
| **Aqueous phase** | | |
| Water | 64.51 | 18 |
| Silcolapse 5000 | 0.10 | |

Example 2 (A ULV insecticide formulation)

|  | %mass/mass | Rel.molar mass |
|---|---|---|
| **Oil Phase** | | |
| Deltamethrin | 1.0 | 505 |
| Heptyl acetate (Exxate 700) [Exxon Chemicals] | 30.0 | 158 |
| Hexadecan-1-ol | 5.0 | 242 |
| **Emulsifier** | | |
| Tegoplant EM11 | 1.0 | 800 |
| **Aqueous phase** | | |
| Silcolapse 5000 (anti foam agent) | 0.1 | – |
| Water | 62.9 | 18 |

The concentrate is diluted 1 + 19 parts with water for spray application.
The parameters for these and the subsequent Examples are given in Table 1.

6

Example 3 (A ULV insecticide formulation)

|  | %mass/mass | Rel.molar mass |
|---|---|---|
| **Oil phase** | | |
| Alpha cypermethrin | 2.0 | 416 |
| Heptyl acetate (Exxate 700) | 30.0 | 158 |
| [Exxon Chemicals] | | |
| Hexadecan-1-ol | 7.0 | 242 |
| | | |
| **Emulsifier** | | |
| Tegoplant EM11 | 1.0 | 800 |
| **Aqueous phase** | | |
| Water | 60.0 | 18 |

Observed average evaporation rate = 4.5

Example 4A (A ULV insecticide formulation)

|  | %mass/mass | Rel. molar mass |
|---|---|---|
| **Oil phase** | | |
| Permethrin | 25.0 | 391 |
| 4-methylpentan-2-one | 32.0 | 100 |
| | | |
| Hexadecan-1-ol | 6.0 | 242 |
| | | |
| **Emulsifiers** | | |
| Tween 80 | 3.6 | |
| Span 80 | 1.4 | |
| | | |
| **Inert or water soluble ingredients** | | |
| Propan-2-ol | 32.0 | - |

This formulation was found to be particularly effective.

7

## Example 4B (A ULV insecticide spray)

|  | %mass/mass | Rel.molar mass |
|---|---|---|
| **Oil phase** | | |
| Permethrin | 25.0 | 391 |
| Hexadecan-1-ol | 6.0 | 242 |
| **Emulsifiers** | | |
| PMO | 3.6 | |
| SMO | 1.4 | |
| **Aqueous phase** | None | |
| **Inert or water-soluble ingredients** | | |
| Propan-2-ol | 32.0 | |
| 4-methylpentan-2-one | 32.0 | |

## Example 5 (A pressure packed insecticide formulation)

|  | %mass/mass | Rel.molar mass |
|---|---|---|
| **Oil phase** | | |
| Bioallethrin | 0.315 | 302 |
| Permethrin | 0.038 | 391 |
| Odourless kerosene | 8.3 | 170 |
| Butane | 40.0 | -* |
| Hexadecan-1-ol | 1.0 | 242 |
| **Emulsifier** | | |
| Tegoplant EM11 | 1.0 | 800 |
| **Aqueous phase** | | |
| Water | 49.347 | 18 |

*excluded due to its volatility (vapour at normal temperatures and pressures)

## Example 6 (A ULV insecticide formulation)

|  | %mass/mass | Rel. molar mass |
|---|---|---|
| **Oil phase** | | |
| Pyrethrins (PY) | 2.0 | 350 |
| Solvent in PY extract | 6.0 | 150 |
| Piperonyl Butoxide | 16.0 | 338 |
| Octadecan-1-ol | 2.5 | 270 |
| **Emulsifier** | | |
| Tegoplant EM11 | 1.0 | 800 |
| **Aqueous phase** | | |
| Water | 72.4 | 18 |
| Silcolapse 5000 | 0.1 | - |

Ready use concentrate (no further dilution required).

## Example 7. A ULV insecticide formulation).

|  | %mass/mass | Rel.molar mass |
|---|---|---|
| **Oil phase** | | |
| Chlorpyrifos-methyl | 20.0 | 323.0 |
| Solvesso 150 | 20.0 | 144.0 |
| [Exxon Chemicals] | | |
| Hexadecan-1-ol | 3.0 | 242 |
| **Emulsifiers** | | |
| Tegoplant EM11 | 2.0 | - |
| **Aqueous phase** | | |
| Water | 54.9 | 18 |
| Silcolapse 5000 | 0.1 | |

## Example 8. A wettable powder formulation

|  | %mass/mass | Rel. molar mass |
|---|---|---|
| **Inorganic carrier** | | |
| Celite 204 | 64.0 | - |
| | | |
| **Oil phase** | | |
| Permethrin | 25.0 | 391 |
| Hexadecan-1-ol | 6.0 | 141 |
| | | |
| **Emulsifiers/dispersing agents** | | |
| Tegoplant EM11 | 1.0 | |
| Sodium diisopropyl naphthalene sulphonate e.g. Aerosol OS [Cyanamid G.B. Ltd.] | 4.0 | |

## Example 9. A ULV herbicide formulation (containing a water soluble herbicide).

|  | %mass/mass | Rel. molar mass |
|---|---|---|
| **Oil phase** | | |
| Solvesso 200 | 10.0 | 163.0 |
| Hexadecan-1-ol | 3.0 | 242 |
| | | |
| **Emulsifiers** | | |
| Span 80 | 6.6 | |
| Tween 80 | 3.4 | |
| | | |
| **Aqueous phase** | | |
| Water | 40.0 | 18 |
| Glyphosate -mono isopropylammonium | 36.9 | |

This formulation may be modified for other water-miscible active ingredients, for example the components of Bordeaux mixture or quaternary ammonium compounds.

## Example 10.  A  LV synergist spray.

|  | %mass/mass | Rel.molar mass |
|---|---|---|
| **Oil phase** | | |
| Piperonyl butoxide | 64.0 | 338 |
| Hexadecan-1-ol | 7.5 | 242 |
| **Emulsifiers** | | |
| NPE | 7.0 | |
| Aqueous phase | None | |

**Inert/water soluble ingredients**

Propan-2-ol                  21.5

## Example 11.  An LV insecticide spray.

|  | %mass/mass | Rel.molar mass |
|---|---|---|
| **Oil phase** | | |
| Solvesso 150 | 8.8 | 144 |
| Hexadecan-1-ol | 1.2 | 242 |
| **Emulsifiers** | | |
| SMO | | 0.3 |
| PMO | | 0.9 |
| Aqueous phase | None | |

**Inert/water soluble ingredients**

| Dimethoate | 80.0 |
|---|---|
| Propan-2-ol | 8.8 |

## Example 12. A wettable powder insecticide spray

|  | %mass/mass | Rel.molar mass |
|---|---|---|
| **Oil phase** |  |  |
| Solvesso 150 | 25.0 | 144 |
| Hexadecan-1-ol | 5.0 | 242 |
| **Emulsifiers** |  |  |
| SDNS |  | 7.5 |
| Aqueous phase | None |  |
| **Inert/water soluble ingredients** |  |  |
| Diflubenzuron | 25.0 |  |
| Mineral silicates | 37.5 |  |

## Example 13. A flowable fungicide spray

|  | %mass/mass | Rel.molar mass |
|---|---|---|
| **Oil phase** |  |  |
| Solvesso 150 | 15.0 | 144 |
| Hexadecan-1-ol | 6.0 | 242 |
| **Emulsifiers** |  |  |
| SMO | 1.4 |  |
| PMO | 3.6 |  |
| **Aqueous phase** |  |  |
| Water (pH = 13) | 48.9 | 18 |
| Sodium hydroxide | 0.1 |  |
| 1,2-propandiol | 4.0 |  |
| **Inert/water soluble ingredients** |  |  |
| Thiabendazole | 20.0 |  |
| Xanthan gum | 0.5 |  |
| Mineral silicates | 0.5 |  |

Example 14.   An LV insecticide spray

|  | %mass/mass | Rel.molar mass |
|---|---|---|
| **Oil phase** | | |
| Exxate 700 | 5.0 | 158 |
| Hexadecan-1-ol | 4.0 | 242 |
| **Emulsifiers** | | |
| OE/PGO | 2.4 | |
| **Aqueous phase** | None | |

**Inert or water soluble ingredients**

| Methomyl | 20.0 |
|---|---|
| Propan-2-ol | 34.3 |
| Ethanol | 34.3 |

Example 15.   A ULV insecticide spray

|  | %mass/mass | Rel.molar mass |
|---|---|---|
| **Oil phase** | | |
| Cypermethrin | 10.0 | 416 |
| Solvesso 150 | 40.0 | 144 |
| Hexadecan-1-ol | 4.0 | 242 |
| **Emulsifiers** | | |
| OE/PGO | 2.0 | |
| **Aqueous phase** | | |
| Water | 44.0 | |

**Inert/water soluble ingredients**

None

Example 16.  A ULV insecticide spray

|  | %mass/mass | Rel.molar mass |
|---|---|---|
| **Oil phase** | | |
| Methoprene | 28.0 | 311 |
| Solvesso 150 | 28.0 | 144 |
| Hexadecan-1-ol | 7.0 | 242 |
| | | |
| **Emulsifiers** | | |
| NPE | | 4.0 |
| | | |
| **Aqueous phase** | None | |
| | | |
| **Inert/water soluble ingredients** | | |
| Propan-2-ol | 33.0 | |

Example 17.  An LV insecticide spray

|  | %mass/mass | Rel.molar mass |
|---|---|---|
| **Oil phase** | | |
| Amitraz | 18.0 | 293 |
| Solvesso 150 | 36.0 | 144 |
| 1-Hexadecylamine | 16.3 | 242 |
| | | |
| **Emulsifiers** | | |
| SMO | 1.8 | |
| PMO | 4.5 | |
| | | |
| **Aqueous phase** | None | |
| | | |
| **Inert/water soluble ingredients** | | |
| Propan-2-ol | 23.4 | |

## Example 18.  An LV insecticide spray

|  | %mass/mass | Rel.molar mass |
|---|---|---|
| Oil phase |  |  |
| Malathion | 65.0 | 330 |
| Hexadecan-1-ol | 7.5 | 242 |
| Emulsifiers |  |  |
| SMO | 2.0 |  |
| PMO | 5.0 |  |
| Aqueous phase | None |  |
| Inert/water soluble ingredients |  |  |
| Propan-2-ol | 20.5 |  |

## Example 19.  An LV insecticide spray

|  | %mass/mass | Rel.molar mass |
|---|---|---|
| Oil phase |  |  |
| Fenitrothion | 65.0 | 277 |
| Hexadecan-1-ol | 4.0 | 242 |
| Emulsifiers |  |  |
| SMO | 2.0 |  |
| PMO | 5.0 |  |
| Aqueous phase | None |  |
| Inert/water soluble ingredients |  |  |
| Propan-2-ol | 24.0 |  |

## Comparative Example A (A ULV insecticide formulation)*

| | %mass/mass | Rel.molar mass |
|---|---|---|
| **Oil phase** | | |
| Permethrin | 10.8 | 391 |
| S-Bioallethrin | 1.7 | 302 |
| Piperonyl Butoxide | 12.3 | 338 |
| Mineral oil | 20.0 | 296 |
| Kerosene | 42.2 | 170 |
| Hexadecan-1-ol | 1.0 | 242 |
| **Inert or water-soluble ingredients** | | |
| Nonylphenol ethylene oxide condensate | 8.2 | 638 |
| Calcium dodecyl benzenesulphonate | 4.3 | 394 |

Dilute 1 + 9 with water for application

Average relative molar mass of oil phase = 254

Molar solubility ratio (moles oil phase/moles long chain alcohol) = 10.0

Model prediction ratio (mass of oil phase/mass of alkanol) of a formulation within the scope of the invention: Maximum ratio with an evaporation rate (L) of 15 units = 33.0, with an L of 10 units = 20.4, and with an L of 5 units = 9.0

The above formulation has the ratio (moles of oil phase/moles long chain alcohol) = 86, and is therefore outside the scope of the invention. The ratio (moles of water/moles of alkanol) = 12100 on dilution.

Observed average evaporation rate = 20 units

*Example I of GB-A-2 095 109.

## ANALYSIS OF FORMULATIONS

The analysis of a given formulation to determine whether it satisfies the formula above is illustrated as follows.

## Analysis of Example 1A :

The permethrin, S-bioallethrin, piperonyl butoxide, odourless kerosene, emulsifiers and antifoam agent could constitute the oil phase. Each one of these components may be taken in turn at the level in the formulation and diluted in water (1 + 9). One would observe that the permethrin, S-bioallethrin, odourless kerosene and piperonyl butoxide are not miscible with water at this dilution level, eg. permethrin has a solubility of 0.2 mg/l of water at 30°C. These components would therefore constitute the oil phase. The emulsifiers would be miscible with water giving a clear solution upon dilution. Of the antifoam agent, (0.1%) 30% of this would not be soluble in the oil phase or the water and would simply be classed as an inert ingredient. The oil phase would then be constituted in the proportions in the formulation. The solubility limit of hexadecan-1-ol would be determined by preparing a series of mixtures and noting the maximum composition at which all the hexadecan-1-ol remained in solution at 27°C after a period of 24 hours. A mixture containing 8.7% mass/mass of hexadecan-1-ol is the composition in this case. The relative molar mass of the oil phase is also required. This is calculated as follows from the relative molar mass of each component and the proportions in the oil phase :

$$\frac{10.32}{391} + \frac{1.51}{302} + \frac{11.32}{338} + \frac{9.30}{170} = \frac{32.45}{\text{RMM mixture}}$$

RMM mixture = 271

The relative molar mass of hexadecan-1-ol is 242.

The molar solubility ratio (moles oil phase/moles film forming agent)

$$= ((100 - 8.7)/271)/(8.7/242) = 9.37$$

This provides all the variables to use in the right hand side of the equation. With L = 15 the predicted maximum ratio of mass of oil phase to film forming agent is 27. The above formulation has a mass of oil phase to film forming agent of 10.8 (33.45/3). Therefore it is clearly within the scope of the formula. The level of hexadecan-1-ol could be reduced to 1.21% with the same level of oil phase and still remain within the cope of the formula. However, a formulation with 1.0% hexadecan-1-ol would be outside the scope of the formula.

Analysis of Example 4A :

This formulation contains permethrin, 4-methylpentan-2-one, hexadecan-1-ol, emulsifiers and propan-2-ol. The formulation is diluted 1+9 parts with water for use.

All the components given could potentially constitute the oil phase once diluted. Propan-2-ol is completely miscible with water over all compositions. The emulsifiers are also water miscible when diluted. The permethrin and 4-methyl pentan-2-one are not completely miscible with water when diluted at this level. The oil phase therefore consists of permethrin and 4-methyl-pentan-2-one. The solubility of hexadecan-1-ol is determined in this mixture as described above at 27°C. The solubility of hexadecan-1-ol in the mixture of permethrin and 4-methyl-pentan-2-one is 16.0% mass/mass. The relative molar mass of the oil phase is calculated from the relative molar mass of the components and their proportion in the oil phase :

$$\frac{25.0}{391} + \frac{32.0}{100} = \frac{87.0}{\text{RMM mixture}}$$

RMM mixture = 149

The relative molar mass of hexadecan-1-ol is 242.

The molar solubility ratio (moles oil phase/moles film forming agent)

$$= ([100 - 16.1])/149)/(16/242) = 8.5$$

This gives all the variables to be used on the right hand side of the equation. With L = 15 then the maximum ratio of oil phase to hexadecan-1-ol is 66. The above formulation has a mass ratio of oil phase to film-forming agent of 9.5 and is therefore well within the scope of the formula. The level of hexadecan-1-ol could be reduced to 0.87% whilst maintaining the oil phase levels constant and still remain within the scope of the formula.

Analysis of Example 4B :

It will be observed that this formulation is the same as that given as example 4A except that the formulation is diluted 1 + 29 parts with water. Permethrin is the only component within the formulation that is immiscible with water at this level of dilution. 0.32 g of 4-methyl-pentan-2-one dissolves completely in 29 g of water. The permethrin in this example constitutes the oil phase. The solubility of hexadecan-1-ol in permethrin is 1.8% w/w which gives a molar solubility ratio of 33.7.

With L = 15 the maximum ratio of oil phase to film-forming agent is 99. At this dilution level the level of hexadecan-1-ol in the formulation could be reduced to 0.4% and still remain within the scope of the formula. This also provided an example of where the evaporation rate of a formulation is improved as a result of further dilution because of additional partitioning of one of the oil phase components in the aqueous phase. There is less oil phase for the film forming agent to dissolve in, thus more will be available to form a film at the surface of the droplet.

Analysis of Example 13 :

This formulation contains Solvesso 150, hexadecan-1-ol, emulsifiers, water, sodium hydroxide, 1,2-propandiol, thiabendazole, xanthan gum, and mineral silicates. This is a fairly complex formulation. The active ingredient is not particularly soluble in the aqueous or oil phase. A fine particulate suspension of the active ingredient is therefore made. The formulation also contains a thickening agent to aid the suspension of the particulates. This is a high molecular weight polysaccharide that is insoluble in the oil phase and can be regarded as an inert substance. The formulation also contains powered mineral silicates of low bulk density to prevent the formulation "caking" (particles sticking together). The 1,2-propandiol is added to prevent freezing and is completely water miscible. The sodium hydroxide is added to buffer the formulation at around pH13 and is water soluble. The oil phase therefore consists of only Solvesso 150 with possibly a small amount of thiabendazole dissolved in it.

The solubility of hexadecan-1-ol in Solvesso 150 is 23.5% mass/mass. The relative molar mass of Solvesso 150 is 144. The molar solubility is 5.5.

The right hand side of the formula with L = 15, gives a ratio (mass of oil phase/mass of film forming agent) = 35. The formulation has a mass ratio of 2.5 and is clearly within the scope of the formula. The level of hexadecan-1-ol could be reduced substantially and the formulation would remain within the scope of the formula.

## Table 1

| Example No: | 1A | 1B | 2 | 3 | 4A | 4B | 5 |
|---|---|---|---|---|---|---|---|
| Dilution for appln. 1+n | 9 | 9 | 19 | 29 | 9 | 29 | 0 |
| Av.Rel.Molar mass of oil phase | 271 | 271 | 162 | 164 | 149 | 391 | 173 |
| Mass solubility | 8.7 | 8.7 | 16.5 | 16.5 | 16.0 | 1.8 | 7.5 |
| Molar solubility ratio | 9.4 | 9.4 | 7.6 | 7.5 | 8.5 | 33.7 | 17.2 |
| Maximum ratio calcd. for L | | | | | | | |
| L = 15 | 27 | 27 | 47 | 45 | 66 | 99 | 145 |
| L = 10 | 17 | 17 | 29 | 28 | 41 | 61 | 90 |
| L = 5 | 7 | 7 | 13 | 12 | 18 | 27 | 40 |
| Mass of oil / Mass of film-former | 10.8 | 10.5 | 6.2 | 4.6 | 9.5 | 9.5 | 8.6 |
| L measured | 3.8 | 3.8 | 4.0 | 4.5 | 5.0 | 4.2 | 3.8 |
| Moles (water) / Moles (film-former) | 4318 | 5278 | 5278 | 5685 | 2016 | 6498 | 663 |

| Example No. | 6 | 7 | 8 | 9 | 10 | 11 |
|---|---|---|---|---|---|---|
| Dilution for appln. 1+n | 0 | 14 | 39 | 39 | 39 | 29 |
| Av.Rel.Molar mass of oil phase | 258 | 199 | 391 | 163 | 338 | 144 |
| Mass solubility | 4.0 | 9.0 | 1.8 | 12.5 | 5.5 | 23.5 |
| Molar solubility ratio | 25.1 | 12.2 | 33.7 | 10.4 | 12.3 | 5.5 |
| Maximum ratio calcd. for L | | | | | | |
| L = 15 | 116 | 68 | 99 | 75 | 28 | 35 |
| L = 10 | 72 | 42 | 61 | 47 | 17 | 22 |
| L = 5 | 32 | 19 | 99 | 21 | 8 | 10 |
| Mass of oil / Mass of film-former | 9.6 | 13.3 | 8.5 | 8.5 | 5.0 | 2.5 |
| L measured | 4.8 | 4.7 | 5.3 | 3.8 | 5.3 | 7.5 |
| Moles (water) / Moles (film-former) | 435 | 6520 | 6691 | 32490 | 6991 | 11089 |

| Example No: | 12 | 13 |
|---|---|---|
| Dilution for appln. 1+n | 39 | 49 |
| Av.Rel.Molar mass of oil phase | 144 | 144 |
| Mass solubility | 23.5 | 23.5 |
| Molar solubility ratio | 5.5 | 5.5 |
| Maximum ratio calcd. for L | | |
| L = 15 | 35 | 35 |
| L = 10 | 22 | 22 |
| L =  5 | 10 | 10 |
| Mass of oil Mass of film-former | 5.0 | 2.5 |
| L measured | 7.0 | 7.5 |
| Moles (water) Moles (film-former) | 10487 | 11089 |

| Example No: | 14 | 15 | 16 | 17 | 18 | 19 |
|---|---|---|---|---|---|---|
| Dilution for appln. 1+n | 19 | 19 | 19 | 19 | 19 | 19 |
| Av.Rel.Molar mass of oil phase | 158 | 166 | 197 | 173 | 330 | 277 |
| Mass solubility | 16.5 | 15.0 | 18.5 | 20.1 | 1.9 | 0.8 |
| Molar solubility ratio | 7.8 | 8.2 | 5.4 | 5.5 | 37.8 | 108 |
| Maximum ratio calcd.for L | | | | | | |
| L = 15 | 51 | 52 | 20 | 26 | 157 | 1038 |
| L = 10 | 32 | 32 | 13 | 16 | 97 | 643 |
| L = 5 | 14 | 14 | 6 | 7 | 43 | 284 |
| Mass of oil / Mass of film-former | 1.3 | 12.5 | 8.0 | 3.3 | 8.7 | 16.3 |
| L measured | 7.3 | 4.7 | 7.8 | 4.5 | 6.4 | 5.1 |
| Moles (water) / Moles (film-former) | 9747 | 6534 | 3649 | 1567 | 3402 | 6386 |

## Claims

1. A formulation suitable for spraying or for dilution with water to form a sprayable preparation, the formulation comprising an active ingredient, an emulsifier and an evaporation retardant and, optionally, a carrier or solvent for the active ingredient, characterised in that the formulation satisfies the following Formula :

$$\frac{\text{mass of oil phase}}{\text{mass of retardant}} \leqslant \frac{M_{oil}}{M_{retardant}} \times \text{Exp}\left[\frac{\ln(L/4)+C\ \ln\ (AX^B)}{C}\right]$$

where L is less than or equal to 15, A = 700376, B = − 1.51, C = 0.8472,
$M_{oil}$ is the weighted average relative molar mass of the oil phase,
$M_{retardant}$ is the weighted average relative molar mass of the retardant, and

$$X = \frac{(M_{oil})^{1.8}}{Y}$$

where Y is the molar solubility ratio of the formulation, defined as the minimum number of moles of the oil phase which will dissolve the retardant, divided by the number of moles of retardant,
provided that, in the Formula above, any solvent which has no liquid phase at 27°C at atmospheric pressure is excluded,
wherein the evaporation retardant is a $C_{16-20}$ alkanol, 1-hexadecylamine, 1-heptadecylamine or 1-octadecylamine.

2. A formulation according to Claim 1 wherein L is less than 10.

3. A formulation according to Claim 2 wherein L is less than 5.

4. A formulation according to any one of the preceding claims wherein the active ingredient is a pesticide or herbicide.

5. A formulation according to Claim 4 wherein the active ingredient is a pyrethroid.

6. A formulation according to any one of the preceding claims wherein the solvent has a relative molar mass of less than 200.

7. A formulation according to Claim 6 wherein the solvent comprises kerosene, odourless kerosene, mineral oil, heptyl acetate, 4-methylpentan-2-one or butane.

8. A formuation according to any one of the preceding claims wherein the formulation is an ultra low volume concentrate and the proportion of the oil phase is between 8% and 30% by mass before dilution for use.

9. A formulation according to any one of claims 1 to 7 wherein the formulation is a wettable power.

10. A formulation according to any one of the preceding claims wherein the evaporation retardant is hexadecan-1-ol or a mixture of hexadecan-1-ol and octadecan-1-ol.

11. A formuation according to claim 10 which is to be diluted before use and which comprises from 1.0 to 7.5% evaporation retardant by mass.

12. A formulation according to any one of the preceding claims wherein the emulsifier is a non-ionic compound with an HLB value of 8-18, or a mixture of non-ionic compounds, the mixture having a weighted average HLB value of 8-18.

13. A formulation according to any one of claims 1 to 7 which is diluted and ready for use and which comprises up to 3.2% oil phase by weight.

14. A formulation according to claim 13 which is diluted and ready for use and which comprises 0.25 to 1.5% oil phase by weight.

15. A method of combatting insect or arcarine pests or unwanted plants by spraying a formulation according to any one of the preceding claims, optionally diluted with water, wherein the formulation comprises an insecticide, acaricide or herbicide.

**Patentansprüche**

1. Formulierung, geeignet zum Aufsprühen oder zur Verdünnung mit Wasser, wobei eine aufsprühbare Zubereitung gebildet wird, wobei die Formulierung einen aktiven Inhaltsstoff, ein Emulgiermittel und einen Verdampfungshemmer und, gegebenenfalls, einen Träger oder ein Lösungsmittel für den aktiven Inhaltsstoff umfaßt, dadurch gekennzeichnet, daß die Formulierung der folgenden Formel

$$\frac{\text{Masse an Öl-Phase}}{\text{Masse an Hemmer}} \leqslant \frac{M_{Öl}}{M_{Hemmer}} \times \text{Exp}\left[\frac{\ln(L/4)+C\ \ln\ (AX^B)}{C}\right]$$

genügt, worin L kleiner oder gleich 15 ist, A = 700376, B = − 1,51, C = 0,8472, $M_{Öl}$ die gewichtete mittlere relative Molmasse der Ölphase bedeutet, $M_{Hemmer}$ die gewichtete mittlere relative Molmasse des Hemmers bedeutet, und

$$X = \frac{(M_{Öl})^{1,8}}{Y},$$

worin Y das molare Löslichkeitsverhältnis der Formulierung darstellt, definiert als die minimale Anzahl an Molen der Ölphase, die den Hemmer lösen, dividiert durch die Anzahl an Molen des Hemmers, mit der Maßgabe, daß in der obigen Formel jedes Lösungsmittel ausgeschlossen ist, das bei 27°C bei Atmosphärendruck keine flüssige Phase aufweist, wobei der Verdampfungshemmer ein $C_{16-20}$-Alkanol, 1-Hexadecylamin, 1-Heptadecylamin oder 1-Octadecylamin ist.

2. Formulierung nach Anspruch 1, wobei L kleiner als 10 ist.

3. Formulierung nach Anspruch 2, wobei L kleiner als 5 ist.

4. Formulierung nach einem der vorhergehenden Ansprüche, wobei der aktive Inhaltsstoff ein Pestizid oder Herbizid ist.

5. Formulierung nach Anspruch 4, wobei der aktive Inhaltsstoff ein Pyrethroid ist.

6. Formulierung nach einem der vorhergehenden Ansprüche, wobei das Lösungsmittel eine relative Molmasse von weniger als 200 aufweist.

7. Formulierung nach Anspruch 6, wobei das Lösungsmittel Kerosin, geruchsloses Kerosin, Mineralöl, Heptylacetet, 4-Methylpentan-2-on oder Butan umfaßt.

8. Formulierung nach einem der vorhergehenden Ansprüche, wobei die Formulierung ein Konzentrat mit ultra-geringem Volumen ist und der Anteil der Ölphase zwischen 8 und 30%-Masse vor Verdünnung zur Verwendung beträgt.

9. Formulierung nach einem der Ansprüche 1 bis 7, wobei die Formulierung ein befeuchtbares Pulver ist.

10. Formulierung nach einem der vorhergehenden Ansprüche, wobei der Verdampfungshemmer Hexadecan-1-ol oder eine Mischung von Hexadecan-1-ol und Octadecan-1-ol ist.

11. Formulierung nach Anspruch 10, welche vor der Verwendung verdünnt werden muß und die von 1,0 bis 7,5%-Masse Verdampfungshemmer umfaßt.

12. Formulierung nach einem der vorhergehenden Ansprüche, wobei das Emulgiermittel eine nicht-ionische Verbindung mit einem HLB-Wert von 8 bis 18, oder eine Mischung von nicht-ionischen Verbindungen ist, wobei die Mischung einen gewichteten durchschnittlichen HLB-Wert von 8 bis 18 aufweist.

13. Formulierung nach einem der Ansprüche 1 bis 7, welche verdünnt und zum Gebrauch fertig ist und bis zu 3,2 Gew.% Ölphase umfaßt.

14. Formulierung nach Anspruch 13, welche verdünnt und zum Gebrauch fertig ist und 0,25 bis 1,5 Gew.% Ölphase umfaßt.

15. Verfahren zur Bekämpfung von Insekten- oder Milbenschädlingen oder unerwünschten Pflanzen durch Aufsprühen einer Formulierung nach einem der vorhergehenden Ansprüche, gegebenenfalls mit Wasser verdünnt, wobei die Formulierung ein Insektizid, Acarizid oder Herbizid umfaßt.

## Revendications

1. Formulation convenant pour la pulvérisation ou pour la dilution avec de l'eau pour former une préparation pulvérisable, la formulation comprenant un constituant actif, un émulsionnant et un retardateur d'évaporation, outre, facultativement, un excipient ou solvant pour le constituant actif, caractérisée en ce que la formulation satisfait à la formule suivante :

$$\frac{\text{masse de la phase huileuse}}{\text{masse du retardateur}} \leq \frac{M_{huile}}{M_{retardateur}} \times \text{Exp}\left[\frac{\ln(L/4) + C \ln(AX^B)}{C}\right]$$

où L est inférieur ou égal à 15,
A = 700376,
B = − 1,51, C = 0,8472,

$M_{huile}$ est la masse molaire relative moyenne pondérée de la phase huileuse,

$M_{retardateur}$ est la masse molaire relative moyenne pondérée du retardateur, et

$$X = \frac{(M_{huile})^{1,8}}{Y}$$

où Y est le rapport de solubilité molaire de la formulation, défini comme étant le nombre minimum de moles de la phase huileuse dissolvant le retardateur, divisé par le nombre de moles de retardateur,

avec la restriction que dans la formule ci-dessus, tout solvant qui n'a pas de phase liquide à 27°C sous la pression atmosphérique est exclu,

où le retardateur d'évaporation est un $C_{16-20}$-alcanol, la 1-hexadécylamine, la 1-heptadécylamine ou la 1-octadécylamine.

2. Formulation suivant la revendication 1, dans laquelle L est inférieur à 10.

3. Formulation suivant la revendication 2, dans laquelle L est inférieur à 5.

4. Formulation suivant l'une quelconque des revendications précédentes, dans laquelle le constituant actif est un pesticide ou herbicide.

5. Formulation suivant la revendication 4, dans laquelle le constituant actif est un pyréthroïde.

6. Formulation suivant l'une quelconque des revendications précédentes, dans laquelle le solvant a une masse molaire relative de moins de 200.

7. Formulation suivant la revendication 6, dans laquelle le solvant comprend du kérosène, du kérosène inodore, de l'huile minérale, de l'acétate d'heptyle, de la 4-méthylpentane-2-one ou du butane.

8. Formulation suivant l'une quelconque des revendications précédentes, dans laquelle la formulation est un concentré pour ultrapetit volume et la proportion de la phase huileuse se situe entre 8% et 30% en masse avant la dilution pour l'utilisation.

9. Formulation suivant l'une quelconque des revendications 1 à 7, dans laquelle la formulation est une poudre mouillable.

10. Formulation suivant l'une quelconque des revendications précédentes, dans laquelle le retardateur d'évaporation est l'hexadécane-1-ol ou un mélange d'hexadécane-1-ol et d'octadécane-1-ol.

11. Formulation suivant la revendication 10, qui est à diluer avant l'utilisation et qui comprend 1,0 à 7,5% en masse de retardateur d'évaporation.

12. Formulation suivant l'une quelconque des revendications précédentes, dans laquelle l'émulsionnant est un composé non ionique ayant un BHL de 8 à 18 ou un mélange de composés non ioniques, le mélange ayant un BHL moyen pondéré de 8 à 18.

13. Formulation suivant l'une quelconque des revendications 1 à 7, qui est diluée et prête à l'utilisation et qui comprend jusqu'à 3,2% en poids de phase huileuse.

14. Formulation suivant la revendication 13, qui est diluée et prête à l'utilisation et qui comprend 0,25 à 1,5% en poids de phase huileuse.

15. Procédé pour combattre des insectes ou acariens nuisibles ou des plantes indésirables par pulvériaation d'une formulation suivant l'une quelconque des revendications précédentes, facultativement diluée avec de l'eau, dans lequel la formulation comprend un insecticide, un acaricide ou un herbicide.